# EUROPEAN PATENT APPLICATION

(11) **EP 0 606 711 A1**
(43) Date of publication of application: **20.07.1994**
(21) Application number: 93308696.9
(22) Date of filing: 01.11.1993
(51) Int. Cl.: G02B 6/44

(54) **Apparatus for use in the assembly of an optical fibre transmission line**

(30) Priority: 31.10.1992 GB 9222842
(71) Applicant: BICC Public Limited Company, London W1X 5FH (GB)
(72) Inventor: Roper, Kenneth J., Huyton, Merseyside L36 5XF (GB)
(74) Representative: Dlugosz, Anthony Charles

(57) **Abstract**

A device indirectly connects an outlet of a feed chamber of an optical fibre installation unit to an open end of a preformed tube, e.g. one that is pre-installed in a building, in order to enable one or more optical fibres to be introduced into the tube by the viscous drag of a flow of gas. The device comprises a flexible hose (6) one end of which can be connected to the feed chamber outlet, the hose having a number of insulated electrical conductors (36) extending along its length. At the other end of the hose is a coupler (1) which comprises a tubular spigot (8) for forming a spigot and socket connection to a connector associated with the tube, an electric safety switch (28) operatively coupled to the spigot and electrically connected to one of the conductors (36) which can be electrically connected to signal means associated with the feed chamber. The coupler (1) includes at least one electrically operated exhaust valve (30) electrically connected to another of the conductors (36) and can be connected to control means associated with the feed chamber so that when a connection has been made between the coupler (1) and a hose a signal can be sent to the control system to close the valves (30) and to commence introduction of the optical fibre(s). The coupler (1) may be provided with one or more triggers (12,14) to enable disconnection of the spigot (8) from the hose and to actuate an override switch that can override the safety switch (28) so that a further length of fibre can be introduced by the feed chamber once the coupler has been disconnected from the tube, thereby enabling the installed fibre to be terminated.

## Description

This invention relates to the assembly of an optical fibre transmission line of the kind consisting of or comprising a preformed tube which extends along the length of the line and in the bore of which at least one lightweight flexible elongate optical element comprising one or more than one optical fibre is so loosely housed that the optical fibre orfibres can move transversely and longitudinally within the bore with respect to the line. The invention is particularly concerned with apparatus for introducing a lightweight flexible elongate optical element comprising one or more than one optical fibre into the bore of a preformed tube.

It has been proposed to assemble an optical fibre transmission line of this kind by introducing the leading end of a lightweight flexible elongate optical element comprising one or more than one optical fibre into an open end of the bore of a preformed tube which has been previously installed in a building, in the ground or elsewhere and by propelling the flexible optical element along the bore of the tube by fluid drag of a gas which will have no deleterious effect on the flexible optical element or on the preformed tube and which is passed through the bore in the desired direction of advance at such a pressure that the flexible optical element is carried along the tube until a length of flexible optical element is loosely housed in and throughout the length of the tube.

For introducing a lightweight flexible elongate optical element comprising one or more than one optical fibre into the bore of a preformed tube, it has been proposed to employ a feed chamber of the kind having inlet and outlet ends and, intermediate thereof, an inlet port for a pressurised gas. When using the feed chamber, the outlet end of the feed chamber is connected to one end of the preformed tube and the flexible optical element is fed by a drive means into the inlet end of the chamber through an aperture which is only slightly larger in cross-sectional area than that of the flexible optical element, through the chamber and into the tube. Pressurised gas is fed into the bore of the chamber through the intermediate inlet port and flows from the chamber into the preformed tube. Pushing of the flexible optical element into the tube by the drive means continues at least until the surface area of the flexible optical element which is exposed to the flow of gas is sufficiently large to produce a drag force which will cause further advance of the flexible optical element along the tube, the rate of feed being controlled by the drive means.

It is an object of the present invention to provide, for use with a feed chamber, an improved device for indirectly connecting the outlet of the feed chamber to an open end of a preformed tube, which improved device is especially, but not exclusively, suitable for use in indirectly connecting the feed chambertoeach of the open ends of a plurality of preformed tubes in turn without any necessity to move the feed chamber and any of its associated equipment.

According to the invention, the improved device comprises a flexible hose having at one end of the hose means for detachably or permanently connecting the hose to the outlet of a feed chamber and at the other end of the hose a coupler for detachably connecting the hose to a hose connector secured to an open end of a preformed tube and having associated with and extending throughout the length of the hose a plurality of flexible insulated electric conductors, which coupler comprises a tubular spigot which projects beyond the free end of the coupler and which is adapted to effect a spigot and socket joint with and to be detachably gripped by said hose connector, an electric safety switch operatively coupled to the spigot and electrically connected to one of said electrically flexible electric conductors which can be electrically connected to signal means associated with the feed chamber via the connecting means at the end of the hose remote from the coupler and at least one electrically operated exhaust valve which is electrically connected to another of said flexible electric conductors which can be electrically connected to control means associated with the feed chamber via said connecting means, the arrangement being such that, when an effective connection has been made between the coupler and a hose connector secured to the open end of the preformed tube, a signal will be sent to said control system to this effect and the control system can be actuated to close the exhaust valve or valves and to commence introduction of the-or each lightweight flexible elongate optical element into the bore of the preformed tube.

The coupler preferably includes two exhaust valves and, in a preferred embodiment, each exhaust valve is a solenoid operated valve.

Preferably, the coupler of the improved device also comprises a manually operable trigger which must be actuated when effecting disconnection of the spigot from the hose connector secured to the open end of a preformed hole, the manually operated trigger being operatively coupled to a second electric switch carried by the coupler and electrically connected to said control system through another of the flexible electric conductors, which second electric switch is adapted to over-ride the safety switch opened by disconnection of the spigot to maintain the signal to said signal means and to alert said control means that a further predetermined length of the or each flexible optical element should be propelled through the flexible hose at a reduced pressure to provide a length or lengths of flexible optical element for terminating purposes.

The safety switch preferably is operably coupled to a plunger which is urged by an associated spring in a direction towards the free end of the spigot, the arrangement being such that, as the spigot effects a spigot and socket joint with a hose connector secured to an open end of a preformed tube, the plunger will be depressed against the action of its associated spring to actuate the safety switch.

Preferably, when the coupler is to be disconnected from a hose connector secured to an open end of a preformed tube, the coupler is urged manually in a direction towards the hose connector to disconnect the grip effected by the hose connector on the spigot and the coupler is then moved manually in the opposite direction to withdraw the spigot from the hose connector so that the plunger, under the action of its associated spring, will move in a direction towards the free end of the spigot to open the safety switch.

Preferably, the flexible hose comprises a central flexible tube of plastics material, a plurality of flexible insulated electric conductors helically wound around the central plastics tube and, overlying the insulated conductors, an overall outer protective sheath. At least the internal surface of the bore of the central plastics tube preferably is of electrically conductive material and, in use, will be connected to earth. In a preferred embodiment, the central plastics tube is made wholly of electrically conductive plastics material. To reduce risk of damage to the flexible hose whilst it is in use, the overall protective sheath, which is preferably of a rubber-like material, may be mechanically protected by an outermost braided layer of electrically insulating filamentary material.

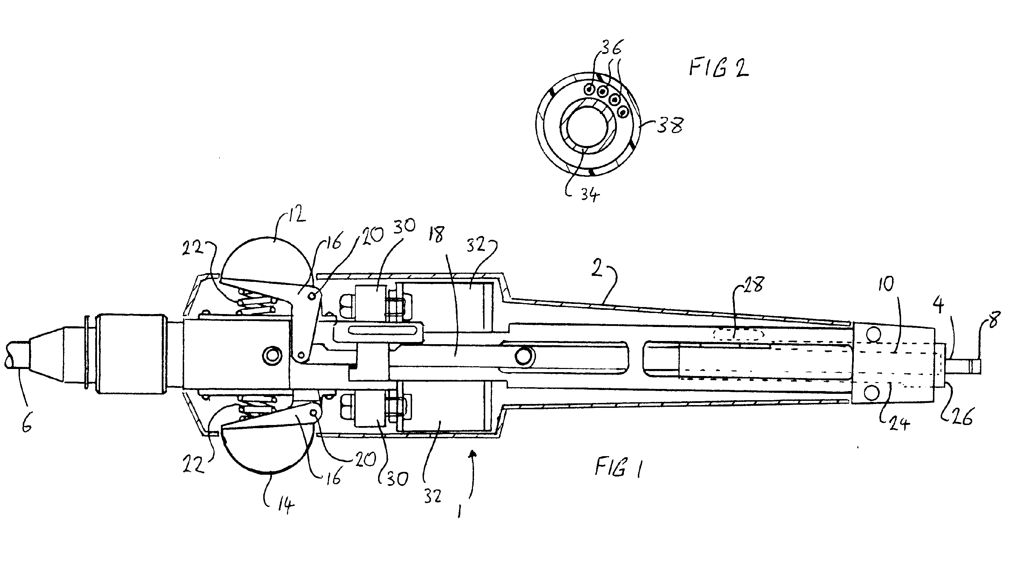

The invention is further illustrated, by way of example, by the accompanying diagrammatic informal drawing, in which:-
Figure 1 is a schematic side sectional elevation of the coupler of a preferred device for indirectly connecting the outlet of a feed chamber to an open end of a preformed tube, which coupler is permanently connected to one end of a flexible hose, and
Figure 2 is a transverse cross-sectional view, drawn on an enlarged scale, of the flexible hose of the improved device.

Referring to the accompanying drawings a coupler 1 is intended for introducing into an open end of a tube pre-installed in a building a lightweight optical element from an installation unit (not shown). The installation unit stores lengths of the optical element on reels and includes a feed chamber into which pressurised gas is introduced, the feed chamber having an outlet end from which gas and the optical element emerge.

The coupler 1 comprises a housing 2 and a tube 4 that extends along the length of the housing, one end of the tube being connected to a flexible hose 6 that is itself connected to the outlet end of the feed chamber of the installation unit and the other end of which ends in the form of a spigot 8. A metal sleeve 10 is located around part of the tube 4 so that it ends just short of the spigot 8, and extends approximately half way along the length of the tube. The end of the sleeve 10 is coupled to each of a pair of triggers 12 and 14 by means of an articulated coupling arrangement comprising a bent arm 16 that supports a trigger and a coupling rod 18 connected between the bent arm 16 and the sleeve 10. Each bent arm 16 is pivotally supported at its elbow 20 and a spring 22 biases the triggers outwardly from the centre of the device, the arrangement being such that manual squeezing of the triggers toward one another wi cause the bent arms 16 to rock about their pivotal elbows and urge the sleeve 10 axially toward the spigot 8 by means of the coupling rods 18.

A plastics plunger 24 has a bore extending therethrough and is located about the tube 4 and sleeve 10 with the tube and sleeve extending through its bore so that one end 26 of the plunger terminates at the spigot 8 in the region of the end of the sleeve 10. The plunger 24 is slidable over the sleeve 10 in a direction away from the spigot 8, but is biased toward the spigot 8 by means of a helical spring (not shown) also disposed around the sleeve 10. A safety switch 28 is actuated by axial movement of the plunger 24. A further switch (not shown) is actuated by one of the triggers and can override the safety switch 28.

A pair of dump valves 30 communicate with the bore of the tube 4 and are activated by solenoids 32 controlled by signals from the installation unit so that the gas pressure within the tube can be released if desired.

The flexible hose 6 that connects the device 1 to the installation unit is shown schematically in cross- section in figure 2 and comprises a central flexible tube 34 formed for example from conductive carbon filled plastics material, a plurality of insulated electrical wires 36 that are helically wrapped around the tube and connect the switches and solenoids in the device to the installation unit, and an outer protective sheath 38 for example in the form of a jacket that has been heat shrunk onto the tube and wires.

In operation, when it is intended to instal one or more lightweight optical fibres into a tube that is pre-installed in a building, the spigot 8 of the device 1 is inserted into an appropriate connecting device (not shown) positioned on the end of the tube to form a spigot and socket connection. As the connecting device is pushed over the spigot 8 it pushes the plunger 24 in a direction away from the spigot 8 against the bias of its associated spring and actuates the safety switch 28. Only once the safety switch 28 has been actuated can the installation unit close the solenoid operated dump values 30 and cause the fibre or fibre to be introduced into the tube via the flexible hose 6 and device 1 under the flow of gas.

When installation of the fibre is complete it is necessary for a length of fibre, for example in the order of one metre, to extend from the end of the tube in order to effect an appropriate termination. In order to expose such a length of fibre, the triggers 12 and 14 of the device 1 are squeezed and the device is pulled away from the tube. The effect of squeezing of the triggers 12 and 14 is to push the sleeve 10 toward the spigot 8 and thereby ease the spigot from the connecting device, and also actuate an override switch that overrides the safety switch 28 and allows the installation unit to supply a further length of optical fibre under reduced gas pressure. As soon as an appropriate length of fibre has been supplied, pressure on the triggers is released and the device 1 is ready to be used to introduce a further quantity of fibre.

In some circumstances it is possible to dispense with the safety switch 28, and so the invention also provides such a device without the safety switch 28.

## Claims

1. A device for indirectly connecting an outlet of a feed chamber to an open end of a preformed tube in order to enable one or more lightweight flexible elongate optical elements comprising one or more than one optical fibre to be introduced into the preformed tube by fluid drag of a gas, which comprises a flexible hose (6) having at one end of the hose means for detachably or permanently connecting the hose to the outlet of a feed chamber and at the other end of the hose a coupler (1) for detachably connecting the hose to a hose connector secured to an open end of a preformed tube and having associated with and extending throughout the length of the hose a plurality of flexible insulated electric conductors (36), which coupler (1) comprises a tubular spigot (8) which projects beyond the free end of the coupler and which is adapted to effect a spigot and socket joint with and to be detachably gripped by said hose connector, an electric safety switch (28) operatively coupled to the spigot and electrically connected to one of said electrically flexible electric conductors which can be electrically connected to signal means associated with the feed chamber via the connecting means at the end of the hose remote from the coupler and at least one electrically operated exhaust valve (30) which is electrically connected to another of said flexible electric conductors which can be electrically connected to control means associated with the feed chamber via said connecting means, the arrangement being such that, when an effective connection has been made between the coupler (1) and a hose connector secured to the open end of the preformed tube, a signal will be sent to said control system to this effect and the control system can be actuated to close the exhaust value or valves (30) and to commence introduction of the or each lightweight flexible elongate optical element into the bore of the preformed tube. 2. A device as claimed in Claim 1, wherein the or each exhaust valve is a solenoid operated valve.

3. A device as claimed in Claim 1 or Claim 2, which includes a manually operable trigger (12,14) which must be actuated when effecting disconnection of the spigot from the hose connector secured to the open end of a preformed hole, the manually operated trigger being operatively coupled to a second electric switch carried by the coupler and electrically connected to said control system through another of the flexible electric conductors (36), which second electric switch is adapted to over-ride the safety switch (28) opened by disconnection of the spigot (8) to maintain the signal to said signal means and to alert said control means that a further predetermined length of the or each flexible optical element should be propelled through the flexible hose at a reduced pressure to provide a length or lengths of flexible optical element for terminating purposes.

4. A device as claimed in any one of Claims 1 to 3, wherein the safety switch (28) is operatively coupled to a plunger (24) which is urged by an associated spring in a direction towards the free end of the spigot, the arrangement being such that, as the spigot (8) effects a spigot and socket joint with a hose connector secured to an open end of a preformed tube, the plunger wi be depressed against the action of its associated spring to actuate the safety switch.

5. A device as claimed in any one of Claims 1 to 4, wherein the flexible hose (6) comprises a central flexible tube (34) of plastics material, a plurality of flexible insulated electric conductors (36) hel- icallywound around the central plastics tube and, overlying the insulated conductors, an overall outer protective sheath (38).

6. A device as claimed in Claim 5, wherein at least the internal surface of the bore of the central plastics tube is formed from electrically conductive material.
